(19) Europäisches Patentamt
European Patent Office
Office européen des brevets

(11) EP 0 773 242 A2

(12) **EUROPÄISCHE PATENTANMELDUNG**

(43) Veröffentlichungstag:
**14.05.1997 Patentblatt 1997/20**

(51) Int. Cl.[6]: **C08F 32/08**, C08F 4/62

(21) Anmeldenummer: **97102182.9**

(22) Anmeldetag: **04.07.1990**

(84) Benannte Vertragsstaaten:
**BE DE ES FR GB IT NL**

(30) Priorität: **08.07.1989 DE 3922546**

(62) Dokumentnummer(n) der früheren Anmeldung(en) nach Art. 76 EPÜ:
**90112732.4 / 0 407 870**

(71) Anmelder: **HOECHST AKTIENGESELLSCHAFT
65929 Frankfurt am Main (DE)**

(72) Erfinder:
- **Brekner, Michael-Joachim, Dr.
65760 Eschborn (DE)**
- **Rohrmann, Jürgen, Dr.
65779 Kelkheim (DE)**
- **Spaleck, Walter, Dr.
65835 Liederbach (DE)**
- **Antberg, Martin, Dr.
65719 Hofheim (DE)**

Bemerkungen:
Diese Anmeldung ist am 12 - 02 - 1997 als Teilanmeldung zu der unter INID-Kode 62 erwähnten Anmeldung eingereicht worden.

(54) **Verfahren zur Herstellung von Cycloolefinpolymeren**

(57) Polymerisate von polycyclischen Olefinen der Formeln I bis IV mit einer Viskositätszahl größer 20 $cm^3/g$ und einer Glastemperatur oberhalb 100°C erhält man ohne Ringöffnung mit einer hohen Polymerisationsgeschwindigkeit bei technisch günstigen Polymerisationstemperaturen mittels eines Katalysators, welcher aus einer stereorigiden, chiralen Metallocenverbindung der Gruppen IVb bis VIb des Periodensystems der Elemente und einem Aluminoxan besteht.

EP 0 773 242 A2

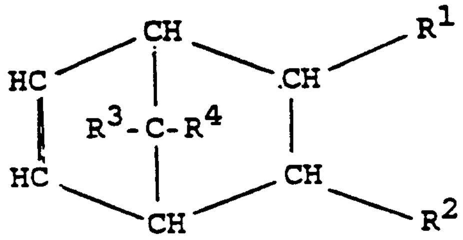

(I)

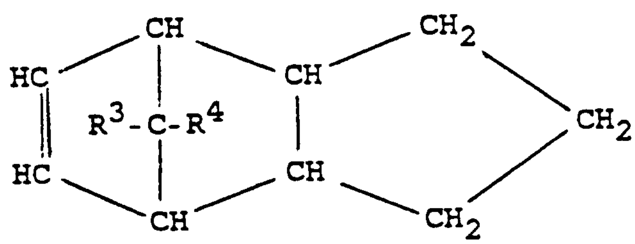

(II)

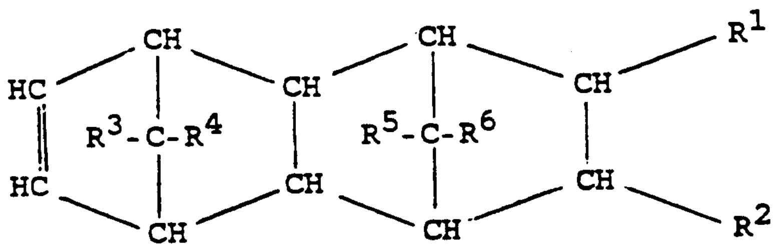

(III)

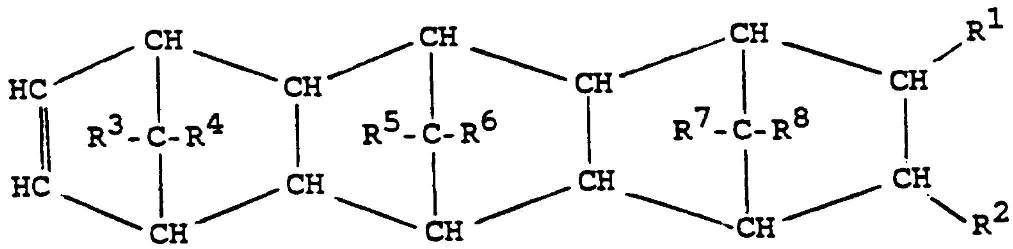

(IV)

## Beschreibung

Die Erfindung bezieht sich auf ein Verfahren zur Herstellung von Homo- und Copolymeren von polycyclischen Olefinen, wobei keine Ringöffnung erfolgt.

Es ist bekannt, daß polycyclische Olefine mittels verschiedener Ziegler-Katalysatoren polymerisiert werden können. Die Polymerisation verläuft in Abhängigkeit vom Katalysator über Ringöffnung (vgl. US 3 557 072 und US 4 178 424) oder Öffnung der Doppelbindung (vgl. EP 156 464, EP 283 164, EP 291 208, EP 291 970).

Der Nachteil einer ringöffnenden Polymerisation besteht darin, daß das erhaltene Polymerisat Doppelbindungen enthält, die zu Kettenvernetzungen führen können und damit die Verarbeitbarkeit des Materials durch Extrudieren oder Spritzgießen erheblich einschränken.

Die Polymerisation unter Öffnung der Doppelbindung führt bei cyclischen Olefinen zu einer relativ niederen Polymerisationsgeschwindigkeit (Umsatzrate).

Als Katalysator läßt sich bei monocyclischen Olefinen eine stereorigide chirale Metallocenverbindung wie Ethylenbis (indenyl)zirkoniumdichlorid verwenden, wobei die Polymerisation unter Erhalt des Ringes erfolgt (vgl. EP 304 671).

Bei den aus den vorgenannten Druckschriften bisher bekannten Propylencopolymeren liegt die Viskositätszahl unterhalb 20 $cm^3/g$ und die Glastemperatur der Copolymeren von Ethylen mit Norbornen überstelgt nicht 100°C.

Es bestand die Aufgabe, ein Verfahren zu finden, welches gestattet, bei der Copolymerisation von polycyclischen Olefinen mit acyclischen Olefinen Polymere mit einer Viskositätszahl größer 20 $cm^3/g$ und einer Glastemperatur oberhalb 100°C zu erhalten.

Es wurde gefunden, daß bei der Verwendung eines bestimmten Metallocens als Katalysator die Aufgabe gelöst werden kann.

Die Erfindung betrifft somit ein Verfahren zur Herstellung eines Cycloolefinpolymers durch Polymerisation von 0,1 bis 100 Gew.-%, bezogen auf die Gesamtmenge der Monomeren, mindestens eines Monomers der Formeln I, II, III oder IV

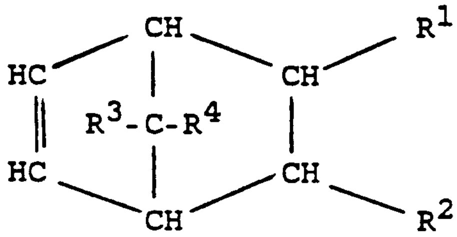

(I)

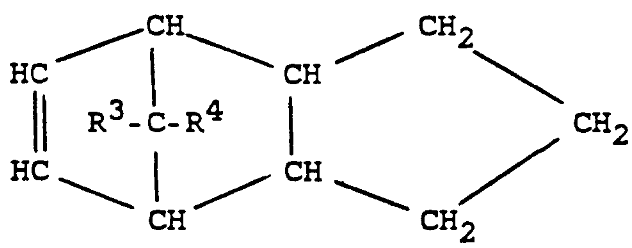

(II)

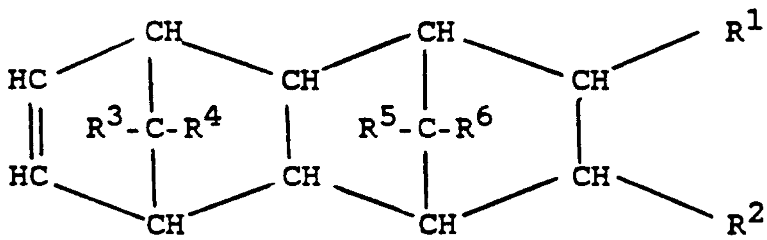

(III)

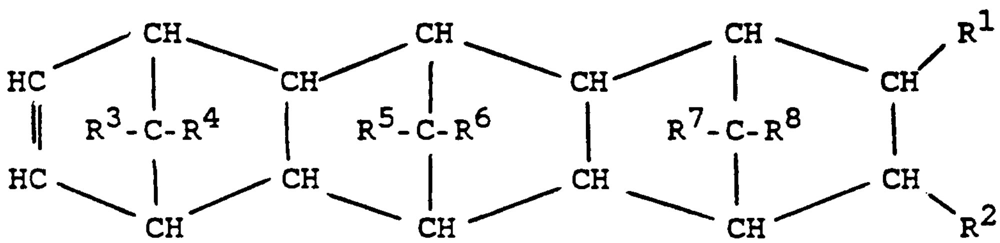

(IV),

worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel V

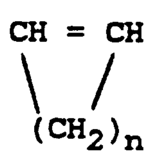

(V)

worin n eine Zahl von 2 bis 10 ist, und
0 bis 99,9 Gew.-%, bezogen auf die Gesamtmenge der Monomeren, mindestens eines acyclischen 1-Olefins der Formel VI

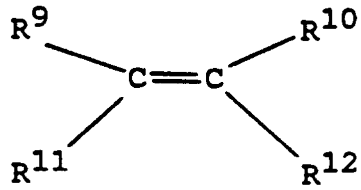

(VI),

worin $R^9$, $R^{10}$, $R^{11}$ und $R^{12}$ gleich oder verschieden sind und ein Wasserstoffatom oder einen $C_1$-$C_8$-Alkylrest bedeuten, in Lösung, in Suspension oder in der Gasphase, bei einer Temperatur von -78 bis 150°C, bei einem Druck von 0,5 bis 64 bar, in Gegenwart eines Katalysators, welcher aus einem Metallocen als Übergangsmetallkomponente und einem Aluminoxan der Formel VII

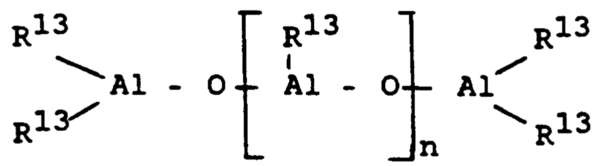

(VII)

für den linearen Typ und/oder der Formel VIII

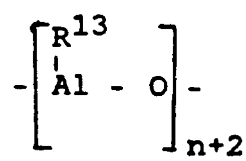

(VIII)

für den cyclischen Typ besteht, wobei in den Formeln VII und VIII $R^{13}$ eine $C_1$-$C_6$-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente mindestens eine Verbindung der Formel IX

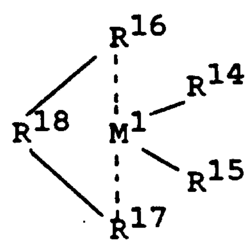

(IX)

ist, worin

| | |
|---|---|
| $M^1$ | Titan, Zirkon, Hafnium, Vanadium, Niob oder Tantal ist, |
| $R^{14}$ und $R^{15}$ | gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten, |
| $R^{16}$ und $R^{17}$ | gleich oder verschieden sind und einen ein- oder mehrkernigen Kohlenwasserstoffrest, welcher mit dem Zentralatom $M^1$ eine Sandwichstruktur bilden kann, bedeuten, |
| $R^{18}$ | |

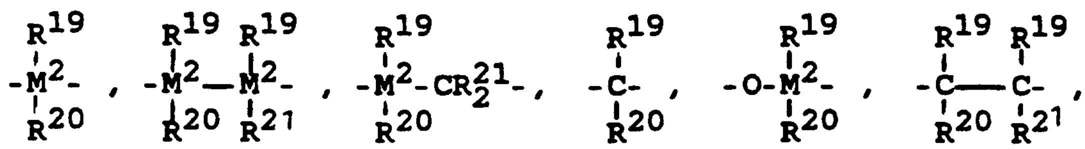

$= BR^{19}$ $= AlR^{19}$, -Ge-, -Sn-, -O-, -S-,= SO, $= SO_2$, $= NR^{19}$, = CO, $= PR^{19}$ oder $= P(O)R^{19}$ist, wobei $R^{19}$, $R^{20}$ und $R^{21}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^{19}$ und $R^{20}$ oder $R^{19}$ und $R^{21}$ jeweils mit den sie verbindenden Atomen einen Ring bilden, und

$M^2$ Silizium, Germanium oder Zinn ist.

Im erfindungsgemäßen Verfahren wird mindestens ein polycyclisches Olefin der Formeln I, II, III oder IV, vorzugsweise ein Cycloolefin der Formeln I oder III,

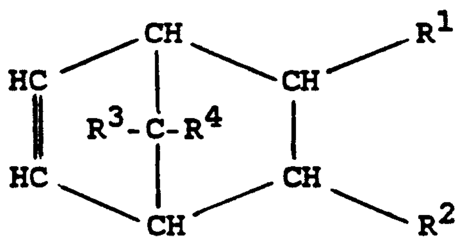

(I)

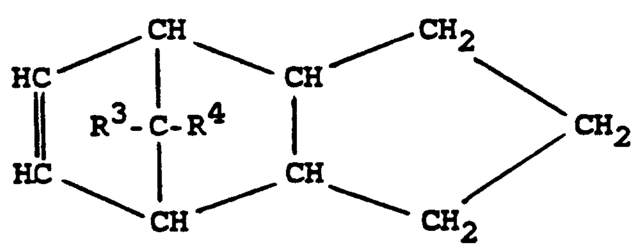

(II)

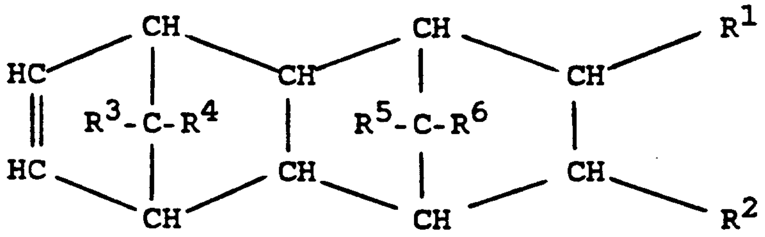

(III)

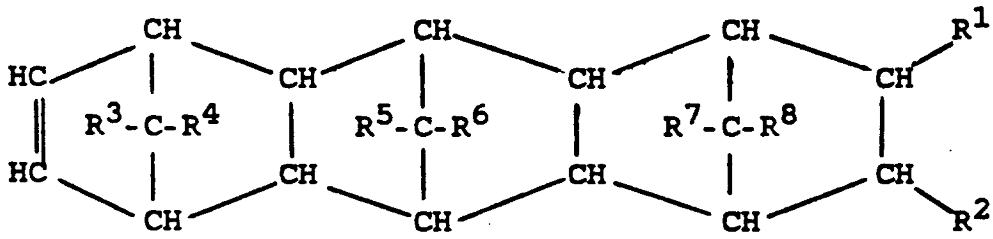

(IV),

worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest bedeuten, wobei gleiche Reste in den verschiedenen Formeln eine unterschiedliche Bedeutung haben können, polymerisiert.

Gegebenenfalls wird auch ein monocyclisches Olefin der Formel V

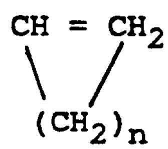

(V),

worin n eine Zahl von 2 bis 10 ist, verwendet. Ein anderes Comonomer ist ein acyclisches 1-Olefin der Formel VI,

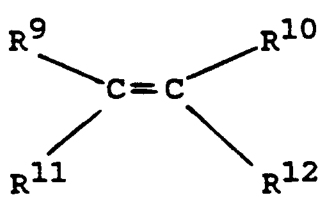

(VI),

worin $R^9$, $R^{10}$, $R^{11}$ und $R^{12}$ gleich oder verschieden sind und ein Wasserstoffatom oder einen $C_1$-$C_8$-Alkylrest bedeuten. Bevorzugt sind Ethylen oder Propylen.

Insbesondere werden Copolymere von polycyclischen Olefinen der Formeln I und III hergestellt.

Das polycyclische Olefin (I bis IV) wird in einer Menge von 0,1 bis 100 Gew.-%, das monocyclische Olefin (V) in einer Menge von 0 bis 99,9 Gew.-% und das acyclische 1-Olefin (VI) in einer Menge von 0 bis 99,9 Gew.-%, jeweils bezogen auf die Gesamtmenge der Monomeren, eingesetzt.

Die Monomeren werden vorzugsweise in folgenden Mengenverhältnissen eingesetzt:

a) das molare Monomerverhältnis polycyclisches Olefin (I bis IV) zu 1-Olefin (VI) beträgt in den entsprechenden Polymeren 1 : 99 bis 99 : 1, vorzugsweise 20 : 80 bis 80 : 20;

b) bei Polymeren aus polycyclischen Olefinen (I bis IV) und monocyclischen Olefinen (V) beträgt das Molverhältnis polycyclisches Olefin zu monocyclischem Olefin 10 : 90 bis 90 : 10;

c) bei Polymeren aus polycyclischen Olefinen (I bis IV), monocyclischen Olefinen (V) und 1-Olefinen (VI) beträgt das molare Monomerverhältnis polycyclisches Olefin zu monocyclischem Olefin zu 1-Olefin 93 : 5 : 2 bis 5 : 93 : 2 bis 5 : 5 : 90, d. h. das Molverhältnis liegt innerhalb eines Mischungsdreiecks, dessen Ecken durch die Molverhältnisse 93 : 5 : 2, 5 : 93 : 2 und 5 : 5 : 90 festgelegt sind;

d) in den Angaben a), b) und c) sind als polycyclische Olefine, monocyclische Olefine und 1-Olefine auch Gemische zweier oder mehrerer Olefine des jeweiligen Typs zu verstehen.

Der für das erfindungsgemäße Verfahren zu verwendende Katalysator besteht aus einem Aluminoxan und mindestens einem Metallocen der Formel IX

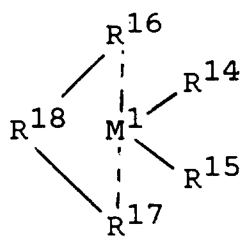

(IX).

In Formel IX ist $M^1$ ein Metall aus der Gruppe Titan, Zirkon, Hafnium, Vanadium, Niob und Tantal, vorzugsweise Zirkon und Hafnium.

$R^{14}$ und $R^{15}$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^{16}$ und $R^{17}$ sind gleich oder verschieden und bedeuten einen ein- oder mehrkernigen Kohlenwasserstoffrest, welcher mit dem Zentralatom $M^1$ eine Sandwichstruktur bilden kann.

Bevorzugt sind $R^{16}$ und $R^{17}$ entweder beide Indenyl oder Tetrahydroindenyl oder $R^{16}$ Fluorenyl und $R^4$ Cyclopentadienyl.

$R^{18}$ ist eine ein- oder mehrgliedrige Brücke, welche die Reste $R^{16}$ und $R^{17}$ verknüpft und bedeutet

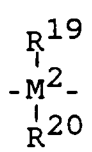 , 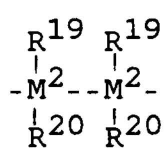 , 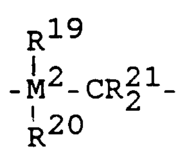 , 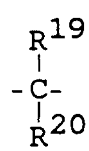 , 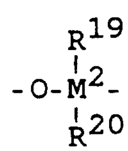 , 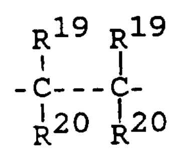 ,

$= BR^{19}$ $= AlR^{19}$, -Ge-, -Sn-, -O-, -S-,= SO, = $SO_2$, = $NR^{19}$, = CO, = $PR^{19}$ oder = $P(O)R^{19}$ist, wobei $R^{19}$, $R^{20}$ und $R^{21}$ gleich oder verschieden sind und ein Wasserstoffatom, ein Halogenatom, vorzugsweise Chlor, eine $C_1$-$C_{10}$-vorzugsweise $C_1$-$C_3$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{10}$-, vorzugsweise $C_6$-$C_8$-Arylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^{19}$ und $R^{20}$ oder $R^{19}$ und $R^{21}$ bilden jeweils zusammen mit den sie verbindenden Atomen einen Ring.

$M^2$ ist Silizium, Germanium oder Zinn, bevorzugt Silizium oder Germanium.

$R^{18}$ ist vorzugsweise $=CR^{19}R^{20}$, $=SiR^{19}R^{20}$, $=GeR^{19}R^{20}$, -O-, -S-, =SO, $=PR^{19}$ oder $=P(O)R^{19}$.

Die Metallocene können nach folgendem Reaktionsschema hergestellt werden:

$$H_2R^{16} + ButylLi \rightarrow HR^{16}Li$$

$$X - R^{18} - X$$

$$H_2R^{17} + ButylLi \rightarrow HR^{17}Li$$

$$HR^{16} - R^{18} - R^{17}H + 2\text{-}Butyl\text{-}Li \longrightarrow$$

$$LiR^{16} - R^{18} - R^{17}Li + M^1Cl_4 \longrightarrow$$

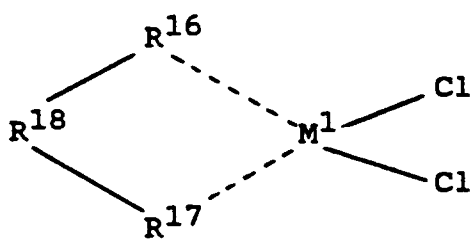

(IX)

oder

$$H_2R^{16} + ButylLi \rightarrow HR^{16}Li$$

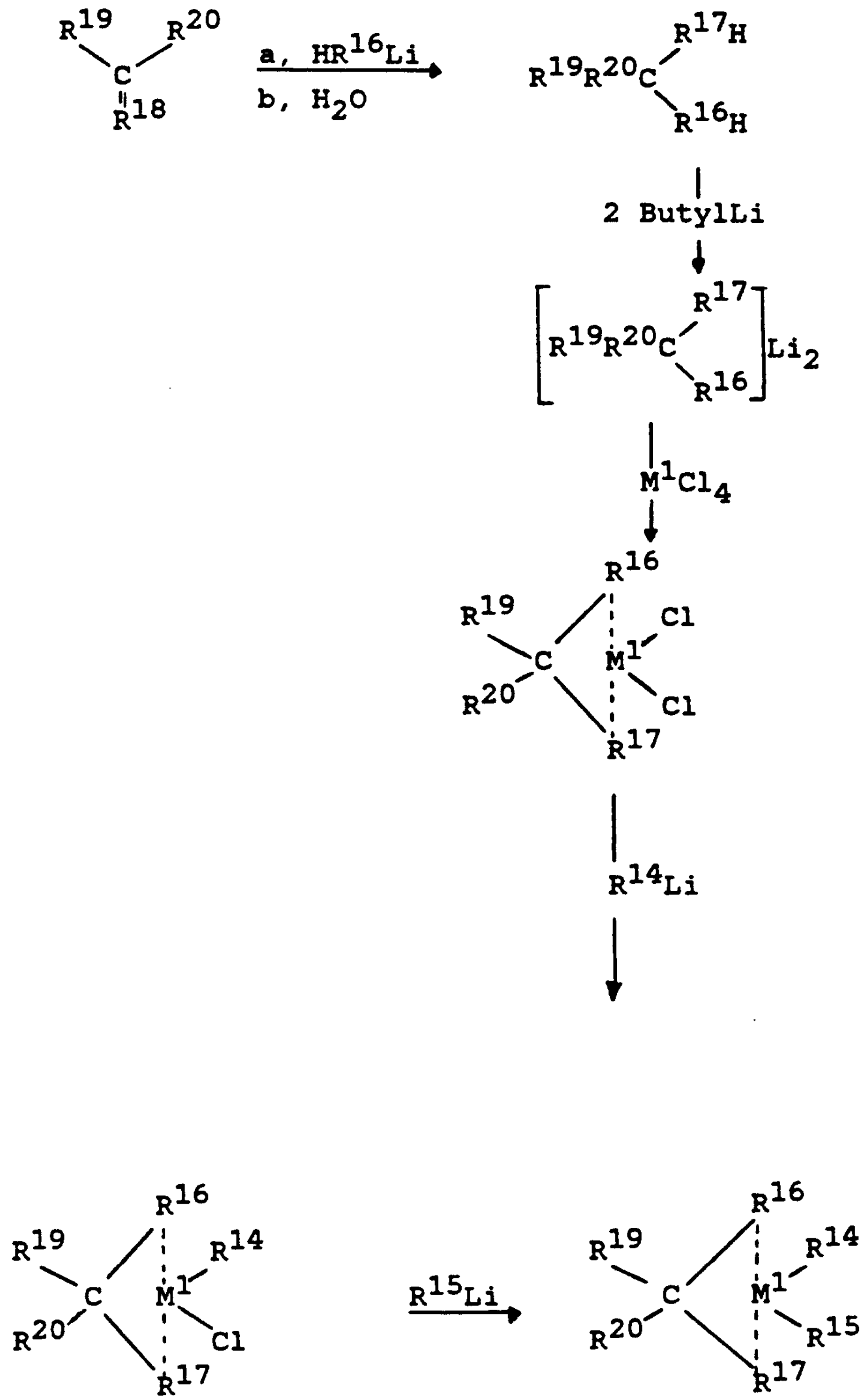


Das obige Reaktionsschema gilt selbstverständlich auch für die Fälle $R^{16} = R^{17}$ und/oder $R^{19} = R^{20}$ und/oder $R^{14} = R^{15}$.

Bevorzugt eingesetzte Metallocene sind:

rac-Dimethylsilyl-bis-(1-indenyl)-zirkondichlorid,
rac-Dimethylgermyl-bis-(1-indenyl)-zirkondichlorid,

rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1'-indenyl)-zirkondichlorid,
rac-Ethylen-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Dimethylsilyl-bis-(1-indenyl) hafniumdichlorid,
rac-Diphenylsilyl-bis-(1-indenyl)-zirkondichlorid,
Diphenylmethylen-(9-fluorenyl)-cyclopentadienyl-zirkondichlorid,
Isopropylen-(9-fluorenyl)-cyclopentadienyl-zirkondichlorid oder deren Gemische.

Besonders bevorzugt sind dabei:

rac-Dimethylsilyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1'-indenyl)-zirkondichlorid,
rac-Ethylen-bis-(1-indenyl)-zirkondichlorid,
rac-Diphenylsilyl-bis-(1-indenyl)-zirkondichlorid,
Diphenylmethylen-(9-fluorenyl)-cyclopentadienyl-zirkondichlorid,
Isopropylen-(9-fluorenyl)-cyclopentadienyl-zirkondichlorid oder deren Gemische.

Der Cokatalysator ist ein Aluminoxan der Formel VII

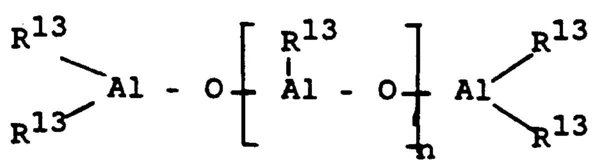

(VII)

für den linearen Typ und/oder der Formel VIII

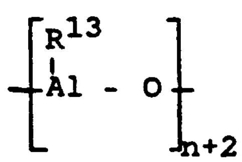

(VIII)

für den cyclischen Typ. In diesen Formeln bedeutet $R^{13}$ eine $C_1$-$C_6$-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol.

Schließlich kann auch das zu polymerisierende Monomere als Lösemittel oder Suspensionsmittel eingesetzt werden. Im Falle von Norbornen werden derartige Massepolymerisationen bei einer Temperatur oberhalb 45°C durchgeführt. Die Molmasse des Polymerisats kann in bekannter Weise geregelt werden; vorzugsweise wird dazu Wasserstoff verwendet.

Die Polymerisation wird in bekannter Weise in Lösung, in Suspension oder in der Gasphase, kontinuierlich oder diskontinuierlich, ein- oder mehrstufig bei einer Temperatur von -78 bis 150°C, vorzugsweise -20 bis 80°C, durchgeführt. Der Druck beträgt 0,5 bis 64 bar und wird entweder durch die gasförmigen Olefine oder mit Hilfe von Inertgas erhalten.

Besonders vorteilhaft sind kontinuierliche sowie mehrstufige Verfahren, weil sie einen rationalen Einsatz des polycyclischen Olefins ermöglichen. Auch läßt sich bei kontinuierlichen Verfahren das polycyclische Olefin, welches als Restmonomer zusammen mit dem Polymeren anfallen kann, zurückgewinnen und wieder dem Reaktionsgemisch zuführen.

Dabei wird die Metallocenverbindung in einer Konzentration, bezogen auf das Übergangsmetall, von $10^{-3}$ bis $10^{-7}$, vorzugsweise $10^{-5}$ bis $10^{-6}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2 \cdot 10^{-2}$ mol pro $dm^3$ Reaktorvolumen verwendet, bezogen auf den Gehalt an Aluminium. Prinzipiell sind aber auch höhere Konzentrationen möglich. Um die Polymerisationseigenschaften verschiedener Metallocene zu kombinieren, ist es möglich, Gemische mehrerer Metallocene einzusetzen.

Gegenüber dem bekannten Stand der Technik zeichnet sich das erfindungsgemäße Verfahren dadurch aus, daß die bevorzugt verwendeten Zirkoniumverbindungen in verdünnter Lösung sehr temperaturstabil sind, so daß sie auch bei Temperaturen bis 80°C eingesetzt werden können.

Bei der Herstellung von Copolymerisaten kann die Variation der Molverhältnisse des polycyclischen Olefins zum eingesetzten 1-Olefin in einem weiten Bereich erfolgen. Durch die Wahl der Polymerisationstemperatur, durch die Konzentration der Katalysatorkomponenten und das eingesetzte Molverhältnis läßt sich die Einbaurate an Comonomer nahezu beliebig steuern. Bei Norbornen wird eine Einbaurate von mehr als 40 mol% erreicht.

Die mittlere Molmasse des gebildeten Copolymers läßt sich durch Variation der Katalysatorkonzentration oder der Temperatur in bekannter weise variieren.

Die Polydispersität $M_w/M_n$ der Copolymeren ist mit Werten zwischen 2,9 - 6,0 (4,5) recht eng, unterscheidet sich aber von den Molmassenverteilungen der mit diesem Katalysatorsystem hergestellten Polyethylene und Polypropylene $M_w/M_n = 2$ deutlich. Dadurch resultiert ein Eigenschaftbild der Polymerisate, das diese für das Spritzgießen besonders

geeignet macht.

Bei der Copolymerisation der polycyclischen Olefine mit den acyclischen Olefinen, insbesondere mit Propylen, entstehen Polymere mit einer Viskositätszahl größer 20 $cm^3/g$. Bei Copolymeren von Norbornen mit acyclischen Olefinen, insbesondere Ethylen, liegt die Glastemperatur oberhalb 100°C.

Bei der Polymerisation von Cyclopenten entstehen, aufgrund der Eigenschaften des Ethylen-bis-(1-indenyl)-zirkondichlorid-Katalysators, Polymere mit hohem stereoregulären Aufbau. Es ist anzunehmen, daß auch die anderen mittels des erfindungsgemäßen Verfahrens hergestellten Polymeren eine hohe Stereoregularität in ihrem Aufbau aufweisen.

Mit dem beschriebenen Verfahren lassen sich amorphe Copolymere herstellen. Die Copolymeren sind transparent und hart. Sie sind beispielsweise in Dekahydronaphthalin bei 135°C und in Toluol bei Raumtemperatur löslich. Die erfindungsgemaßen Polymeren sind thermoplastisch verarbeitbar. Sowohl beim Extrudieren als auch beim Spritzgießen wurde kein bemerkenswerter Abbau oder Viskositätsaufbau gefunden.

Die erfindungsgemäßen Materialien eignen sich besonders zur Herstellung von Extrusionsteilen wie Folien, Schläuchen, Rohren, Stangen und Fasern als auch zur Herstellung von Spritzgußartikeln beliebiger Form und Größe. Eine wichtige Eigenschaft der erfindungsgemäßen Materialien ist ihre Transparenz. Dadurch kommen besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,545. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

Die erfindungsgemäßen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polysmide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen (Tg) wurden mittels DSC (Differential Scanning Calorimetry) bei einer Aufheizrate von 20°C/min bestimmt. Die angegebenen Viskositätszahlen wurden gemäß DIN 53 728 ermittelt.

**Beispiel 1**

Darstellung von rac-Dimethylsilyl-bis-(1-indenyl)-zirkondichlorid (Metallocen A)

Alle nachfolgenden Arbeitsoperationen sind in Inertgasatmosphäre unter Verwendung absolutierter Lösemittel durchgeführt worden (Schlenk-Technik).

Eine Lösung von 30 g (0,23 mol) über Aluminiumoxid filtriertem Inden (techn. 91 %) in 200 $cm^3$ Diethylether wurde unter Eiskühlung mit 80 $cm^3$ (0,20 mol) einer 2,5-molaren Lösung von n-Butyllithium in Hexan versetzt. Man rührte den Ansatz noch 15 min bei Raumtemperatur und gab die orangefarbene Lösung über eine Kanüle innerhalb 2 Stunden zu einer Lösung von 13,0 g (0,10 mol) Dimethyldichlorsilan (99 %) in 30 $cm^3$ Diethylether. Die orangefarbene Suspension wurde über Nacht gerührt und dreimal mit 100 - 150 $cm^3$ Wasser ausgeschüttelt. Die gelbe organische Phase wurde zweimal über Natriumsulfat getrocknet und im Rotationsverdampfer eingedampft. Das verbleibende orange Öl wurde 4 bis 5 Stunden im Ölpumpenvakuum bei 40°C gehalten und von überschüssigem Inden befreit, wobei ein weißer Niederschlag ausfiel. Durch Zugabe von 40 $cm^3$ Methanol und Kristallisation bei -35°C ließen sich insgesamt 20,4 g (71 %) der Verbindung $(CH_3)_2Si(Ind)_2$ als weißes bis beiges Pulver isolieren. Fp. 79 - 81°C (2 Diastereomere).

Eine Lösung von 5,6 g (19,4 mmol) $(CH_3)_2Si(Ind)_2$ in 40 $cm^3$ THF wurde bei Raumtemperatur langsam mit 15,5 $cm^3$ (38,7 mmol) einer 2,5-molaren Hexan-Lösung von Butyllithium versetzt. 1 Stunde nach Beendigung der Zugabe wurde die tiefrote Lösung innerhalb 4 - 6 Stunden zu einer Suspension von 7,3 g (19,4 mmol) $ZrCl_4 \cdot 2THF$ in 60 $cm^3$ THF zugetropft. Nach 2 Stunden Rühren wurde der orange Niederschlag über eine Glasfritte abgesaugt und aus $CH_2Cl_2$ umkristallisiert. Man erhielt 1,0 g (11 %) rac-$(CH_3)_2Si(Ind)_2\ ZrCl_2$ in Form oranger Kristalle, die sich ab 200°C allmählich zersetzen. Korrekte Elementaranalysen. Das E1-Massenspektrum zeigte $M^+$ = 448. $^1$H-NMR-Spektrum ($CDCl_3$): 7,04 - 7,60 (m, 8, arom. H), 6,90 (dd, 2, $\beta$-Ind H), 6,08 (d, 2, $\alpha$-Ind H), 1,12 (s, 6, $SiCH_3$).

**Beispiele 2 - 9**

Die Metallocene B, C, D, E, F, G, H und I gemäß der Tabelle 1 wurden analog Beispiel 1 dargestellt, wobei statt des Dimethyldichlorsilans eine Dihalogenverbindung gemäß der Tabelle 2 und bei den Hafniumverbindungen (Metallocene G, H und I) $HfCl_4$ anstelle von $ZrCl_4$ verwendet wurde.

**Beispiel 10**

Darstellung von Diphenylmethylen(9-fluorenyl)-cyclopentadienyl-zirkondichlorid - (Metallocen L)

Eine Lösung von 5,10 g (30,7 mmol) Fluoren in 60 $cm^3$ THF wurde bei Raumtemperatur mit 12,3 $cm^3$ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Zur dunkelroten Lösung wurden 60 $cm^3$ Wasser zugesetzt, wobei sich die Lösung gelb färbte, und die Lösung ausgeethert. Die über $MgSO_4$ getrocknete Etherphase wurde eingeengt und bei -35°C der Kristallisation überlassen. Man erhielt 5,1 g (42 %) 1,1-Cyclopentadienyl-(9-fluorenyl)-diphenylmethan als beiges Pulver.

2,0 g (5,0 mmol) der Verbindung wurden in 20 $cm^3$ THF gelöst und bei 0°C mit 6,4 $cm^3$ (10 mmol) einer 1,6 molaren Lösung von Butyllithium in Hexan versetzt. Nach 15 min Rühren bei Raumtemperatur wurde das Lösemittel abgezogen, der rote Rückstand im Ölpumpenvkauum getrocknet und mehrmals mit Hexan gewaschen. Nach dem Trocknen im Ölpumpenvakuum wurde das rote Pulver bei -78°C zu einer Suspension von 1,16 g (5,00 mmol) $ZrCl_4$ gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 $cm^3$ $CH_2Cl_2$ gewaschen, im Ölpumpenvakuum getrocknet und mit 120 $cm^3$ Toluol extrahiert. Nach Abziehen des Lösemittels und Trocknen im Ölpumpenvakuum erhielt man 0,55 g des Zirkon-Komplexes in Form eines rosaroten Kristallpulvers.

Das orangerote Filtrat des Reaktionsansatzes wurde eingeengt und bei -35°C der Kristallisation überlassen. Aus $CH_2Cl_2$ kristallisieren weitere 0,45 g des Komplexes.

Gesamtausbeute 1,0 g (36 %). Korrekte Elementaranalysen. Das Massenspektrum zeigte $M^+$ = 556. $^1$H-NMR-Spektrum (100 MHz, $CDCl_3$): 6,90 - 8,25 (m, 16, Flu-H, Ph-H), 6,40 (m, 2, Ph-H), 6,37 (t, 2, Cp-H), 5,80 (t, 2, Cp-H).

**Beispiel 11**

Darstellung von Isopropylen-(9-fluorenyl)-cyclopentadienyl-zirkondichlorid - (Metallocen M)

Metallocen M wurde in Anlehnung an die Literaturstelle J. Am. Chem. Soc. 110 (1988) 6255 hergestellt.

**Beispiel 12**

Ein sauberer und trockener 1,5 $dm^3$-Polymerisationsreaktor mit Rührer wurde mit Stickstoff und dann mit Ethylen gespült und mit einer Lösung von 25 g Norbornen in 750 $cm^3$ Toluol gefüllt. Unter Rühren wurde dann der Reaktor auf eine Temperatur von 20°C gebracht und 1 bar Ethylen aufgedrückt.

Danach wurden 20 $cm^3$ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 20°C gerührt, wobei durch Nachdosieren der Ethylendruck bei 1 bar gehalten wurde (Sättigung des Toluols mit Ethylen). Parallel dazu wurden 30,5 mg Metallocen A in 10 $cm^3$ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 1 Stunde bei 20°C polymerisiert, wobei der Ethylendruck durch Nachdosieren bei 1 bar gehalten wurde. Dann wurde der Reaktorinhalt schnell in ein Rührgefäß abgelassen, in dem 100 $cm^3$ Isopropanol vorgelegt waren. Diese Mischung wurde mit 2 $dm^3$ Aceton versetzt, 10 min gerührt und dann der suspendierte polymere Feststoff abfiltriert. Das abfiltrierte Polymer wurde dann in 300 $cm^3$ einer Mischung aus zwei Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80°C und 0,2 bar 15 Stunden getrocknet. Es wurde eine Produktmenge von 55 g erhalten. An dem Produkt wurde eine Viskositätszahl VZ von 244 $cm^3$/g und eine Glastemperatur Tg von 32°C gemessen.

**Beispiele 13 - 16**

Es wurden Polymerisationsversuche analog Beispiel 12 durchgeführt. Gegenüber Beispiel 12 wurden variiert:

- Art des eingesetzten Metallocens

- Menge des eingesetzten Metallocens.

Alle anderen Parameter blieben konstant. Variierte Parameter und Polymerisationsergebnisse zeigt Tabelle 3.

**Beispiele 17 - 21 und Vergleichsversuche a und b**

Es wurden Polymerisationsversuche analog Beispiel 12 durchgeführt. Gegenüber Beispiel 12 wurden variiert:

- Art des eingesetzten Metallocens
- Menge des eingesetzten Metallocens
- Art des Lösemittels für Norbornenlösung
- Menge des eingesetzten Norbornens
- Polymerisationszeit (t)
- Polymerisationstemperatur (T)
- Ethylendruck (p).

Alle anderen Parameter blieben konstant. Variierte Parameter und Polymerisationsergebnisse zeigt Tabelle 4.

**Beispiel 22**

Die Polymerisation wurde gemäß Beispiel 12 durchgeführt mit dem Unterschied, daß anstatt Ethylen Stickstoff eingesetzt wurde und anstatt 25 g Norbornen eine Mischung aus 94,16 g Norbornen und 84,16 g 4-Methyl-1-penten eingesetzt wurde. Weiterhin abweichend von Beispiel 12 wurden 61,4 mg Metallocen A eingesetzt und die Polymerisationszeit war 3 Stunden. Es wurden 3,5 g Produkt mit einer Glastemperatur von 80°C erhalten.

**Beispiel 23**

Die Polymerisation wurde gemäß Beispiel 12 durchgeführt mit dem Unterschied, daß anstatt Norbornen eine Mischung aus 94,16 g Norbornen und 84,16 g 4-Methyl-1-penten eingesetzt wurde. Weiterhin abweichend von Beispiel 12 wurden 62,2 mg Metallocen A eingesetzt und die Polymerisationszeit war 3 Stunden. Es wurden 11,8 g Produkt mit einer Glastemperatur von 55°C erhalten.

**Beispiel 24**

Es wurde ein Polymerisationsversuch analog Beispiel 12 durchgeführt. Die in den Reaktor eingefüllte Norbornenlösung war jedoch eine Lösung von 15 g Norbornen in 750 $cm^3$ Hexan; es wurden 29,6 mg Metallocen eingesetzt. Man erhielt 8 g Polymeres mit VZ = 116 $cm^3/g$ und Tg = 36°C.

**Beispiel 25**

Ein sauberer und trockener 1,5 $dm^3$-Polymerisationsreaktor mit Rührer wurde mit Stickstoff und dann mit Propylen gespült und mit einer Lösung von 30 g Norbornen in 750 $cm^3$ Toluol gefüllt. Unter Rühren wurde dann der Reaktor auf eine Temperatur von 20°C gebracht und 1 bar Propylen aufgedrückt. Danach wurden 20 $cm^3$ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 20°C gerührt, wobei durch Nachdosieren der Propylendruck bei 1 bar gehalten wurde (Sättigung des Toluols mit Propylen). Parallel dazu wurden 30,9 mg Metallocen A in 10 $cm^3$ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 3 Stunden bei 20°C polymerisiert, wobei der Propylendruck durch Nachdosieren bei 1 bar gehalten wurde. Dann wurde der Reaktorinhalt schnell in ein Rührgefäß abgelassen, in dem 100 $cm^3$ Isopropanol vorgelegt waren. Diese Mischung wurde mit 2 $dm^3$ Aceton versetzt, 10 min gerührt und dann der suspendierte polymere Feststoff abfiltriert. Das abfiltrierte Polymer wurde dann in 300 $cm^3$ einer Mischung aus zwei Teilen 3-normaler Salzsäure und einem Teil Ethanol gegeben und diese Suspension 2 Stunden gerührt. Dann wurde die gerührte Mischung mit 200 $cm^3$ Toluol versetzt und nach weiteren 5 min Rühren die toluolische Phase abgetrennt, mit 1 $dm^3$ Aceton versetzt. Das durch Extraktion der salzsauren Mischung in Toluol gelöste Polymere wurde so ausgefällt. Der ausgefällte polymere Feststoff wurde dann abfiltriert und bei 80°C und 0,2 bar 15 h getrocknet.

Es wurde eine Produktmenge von 5,4 g erhalten. An dem Produkt wurde eine Viskositätszahl VZ = 23 $cm^3/g$ und eine Glastemperatur Tg = 96,6°C gemessen.

**Beispiele 26 - 37**

Es wurden Polymerisationsversuche analog Beispiel 19 durchgeführt. Gegenüber Beispiel 19 wurden variiert:

- Art des eingesetzten Metallocens
- Menge des eingesetzten Metallocens.
- Menge des eingesetzten Norbornens
- Polymerisationstemperatur (T).

In Verusch 28 - 30 wurde eine toluolische Methylaluminoxanlösung mit 10,3 Gew.-% Methylaluminoxan mit Molmasse 750 g/mol nach kryoskopischer Bestimmung verwendet. Alle anderen Parameter blieben konstant. Variierte Parameter und Polymerisationsergebnisse zeigt Tabelle 5.

**Beispiel 38**

Es wurde ein Polymerisationsversuch analog Beispiel 25 durchgeführt. Die in den Reaktor eingefüllte Norbornenlösung war jedoch eine Lösung von 15 g Norbornen in 750 $cm^3$ Hexan; die eingesetzte Menge an Metallocen A war 31,6 mg und die Polymerisationstemperatur 40°C.

Man erhielt 5,3 g Polymer mit VZ = 7 $cm^3/g$ und Tg = 87°C.

**Beispiel 39**

Ein sauberer und trockener 1,5 $dm^3$-Polymerisationsreaktor mit Rührer wurde mit Stickstoff und dann mit Propylen gespült und mit einer Lösung von 107 g Norbornen in 750 $cm^3$ Toluol gefüllt. Unter Rühren wurde dann der Reaktor auf eine Temperatur von 20°C gebracht und 1 bar Propylen aufgedrückt. Danach wurden 20 $cm^3$ toluolische Methylaluminoxanlösung (10,1 Gew.-% Methylaluminoxan mit Molmasse 750 g/mol nach kryoskopischer Bestimmung) in den Reaktor dosiert und die Mischung 15 min bei 20°C gerührt, wobei durch Nachdosieren der Propylendruck bei 1 bar gehalten wurde (Sättigung des Toluols mit Propylen). Parallel dazu wurden 64,1 mg Metallocen A in 10 $cm^3$ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 3 Stunden bei 20°C polymerisiert, wobei der Propylendruck durch Nachdosieren bei 1 bar gehalten wurde. Dann wurde der Reaktorinhalt schnell in ein Rührgefäß abgelassen, in dem 100 $cm^3$ Isopropanol vorgelegt waren. Diese Mischung wurde mit 2 $dm^3$ Aceton versetzt, 10 min gerührt und dann der suspendierte polymere Feststoff abfiltriert. Das abfiltrierte Polymer wurde dann in 300 $cm^3$ einer Mischung aus zwei Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80°C und 0,2 bar 15 Stunden getrocknet.

Es wurde eine Produktmenge von 2 g erhalten. An dem Produkt wurde eine Viskositätszahl VZ von 26,1 $cm^3/g$ und eine Glastemperatur Tg von 129,5°C gemessen.

**Beispiele 40 - 43**

Es wurden Polymerisationsversuche gemäß Beispiel 39 durchgeführt. Gegenüber Beispiel 39 wurden variiert:

- Molekulargewicht des Methylaluminoxans
- Art des eingesetzten Metallocens
- Menge des eingesetzten Metallocens
- Menge des eingesetzten Norbornens
- Propylendruck (P).

Alle anderen Parameter blieben konstant, variierte Parameter und Polymerisationsergebnisse zeigt Tabelle 6.

**Beispiel 44**

Es wurde ein Polymerisationsversuch gemäß Beispiel 12 durchgeführt, wobei anstatt Norbornen 110 g 1,4,5,8-Dimethano-1,2,3,4,4a,5,8,8a-octahydronaphthalin und anstatt 30,5 mg 61,5 mg Metallocen A eingesetzt wurden. 17 g Polymer wurde erhalten. An dem Polymer wurde eine Viskositätszahl VZ = 120 $cm^3/g$ und eine Glastemperatur Tg = 124°C gemessen.

**Beispiel 45**

Es wurde ein Polymerisationsversuch gemäß Beispiel 17 durchgeführt, wobei anstatt Norbornen ein Gemisch aus 94 g Norbornen und 68 g Cyclopenten eingesetzt wurde. 17,4 g Polymer wurden erhalten. An dem Polymer wurde eine Viskositätszahl VZ = 137 $cm^3/g$ und eine Glastemperatur Tg = 117°C gemessen.

**Beispiel 46**

An zwei erfindungsgemäßen Ethylen-Norbornen-Copolymeren, welche eine Glastemperatur von 55 bzw. 115°C sowie eine Viskositätszahl von 240 bzw. 230 $cm^3/g$ aufweisen, wurden mittels $C^{13}$-NMR (Nuclear Magnetic Resonance) auf der Basis des Verhältnisses zwischen der Anzahl von tertiären und sekundären Kohlenstoff-Atomen Norbornen-Einbauraten von 27 bzw. 41,5 mol-% bestimmt.

**Beispiel 47**

40 g eines gemäß Beispiels 20 hergestellten Polymers wurden bei 200°C 1 Stunde in einem Meßkneter (Fa. HAAKE) unter Inertgas (Ar) geknetet. Das Drehmoment hatte sich nach der Befüllung stabilisiert und war über die Dauer von 45 Minuten konstant geblieben.

**Beispiel 48**

Analog zu Beispiel 46 wurden 20 g eines gemäß Beispiels 20 hergestellten Polymers zusammen mit 20 g eines gemäß Beispiels 21 hergestellten Polymers geknetet. Die so erhaltene Legierung war transparent. Mittels DSC bei einer Aufheizrate von 20°C/min ließ sich nur eine Glasstufe bei 149°C ausmachen.

Tabelle 1

| Verbindung | Kurzbezeichnung |
|---|---|
| rac-Dimethylsilyl-bis-(1-indenyl)-zirkondichlorid | Metallocen A |
| rac-Dimethylgermyl-bis-(1-indenyl)-zirkondichlorid | Metallocen B |
| rac-Phenylmethylsilyl-bis-(1-indenyl)-zirkondichlorid | Metallocen C |
| rac-Phenylvinylsilyl-bis-(1-indenyl)-zirkondichlorid | Metallocen D |
| 1-Silacyclobutyl-bis-(1'-indenyl)-zirkondichlorid (Isomerenmischung: 57 % rac-Isomeres, 43 % meso-Isomeres) | Metallocen E |
| rac-Ethylen-bis-(1-indenyl)-zirkondichlorid | Metallocen F |
| rac-Diphenylsilyl-bis-(1-indenyl)-hafniumdichlorid | Metallocen G |
| rac-Phenylmethylsilyl-bis-(1-indenyl)-hafniumdichlorid | Metallocen H |
| rac-Dimethylsilyl-bis-(1-indenyl)-hafniumdichlorid | Metallocen I |
| rac-Diphenylsilyl-bis-(1-indenyl)-zirkondichlorid | Metallocen K |
| Diphenylmethylen-(9-fluorenyl)-cyclopentadienyl-zirkondichlorid | Metallocen L |
| Isopropylen-(9-fluorenyl)-cyclopentadienyl-zirkondichlorid | Metallocen M |

Tabelle 2

| Metallocen | Dihalogenverbindung |
|---|---|
| A | Dimethyldichlorsilan |
| B | Dimethylgermaniumdichlorid (Dimethyldichlorgerman) |
| C | Phenylmethyldichlorsilan |
| D | Phenylvinyldichlorsilan |
| E | Cyclotrimethylendichlorsilan |
| F | 1,2-Dibromethan |
| G | Diphenyldichlorsilan |
| H | Phenylmethyldichlorsilan |
| I | Dimethyldichlorsilan |
| J | Diphenyldichlorsilan |

Tabelle 3

| Beispiel | Metallocen | Menge Metallocen (mg) | T (°C) | Produktmenge (g) | VZ ($cm^3$/g) | Tg (DSC) (°C) |
|---|---|---|---|---|---|---|
| 13 | B | 31,4 | 20 | 3,3 | 337 | 23,5 |
| 14 | K | 33,5 | 20 | 14,0 | 96 | 31,2 |
| 15 | L | 43,7 | 20 | 9,0 | 121 | 37,6 |
| 16 | M | 29,3 | 20 | 12,0 | 99 | 32,2 |

Tabelle 4

| Beispiel | Metallocen | Menge Metallocen (mg) | Norbornenmenge (g) | T (°C) | P (bar) | t (h) | Lösemittel | Produktmenge (g) | VZ ($cm^3/g$) | Tg (DSC) (°C) |
|---|---|---|---|---|---|---|---|---|---|---|
| 17 | A | 60 | 107 | 20 | 1 | 3 | Toluol | 54,1 | 177 | 105 |
| 18 | A | 66,5 | 214 | 70 | 1,5 | 3 | Benzinfraktion Kp.110-130°C | 9,5 | 55 | 163 |
| 19 | A | 60 | 107 | 40 | 1 | 3 | Toluol | 6,0 | 62 | 156 |
| 20 | A | 60 | 180 | 20 | 1 | 1 | Toluol | 7,6 | 65 | 146 |
| Vgl. a | F | 60 | 180 | 20 | 1 | 1 | Toluol | 35,0 | 157 | 134 |
| 21 | A | 60 | 214 | 20 | 1 | 3 | Toluol | 16,8 | 110 | 154 |
| Vgl. b | F | 60 | 214 | 20 | 1 | 3 | Toluol | 34,4 | 191 | 141 |

Tabelle 5

| Beispiel | Metallocen | Menge Metallocen (mg) | Menge Norbornen (g) | T (°C) | Produktmenge (g) | VZ ($cm^3/g$) | Tg (DSC) (°C) |
|---|---|---|---|---|---|---|---|
| 26 | C | 60,9 | 30 | 40 | 1,4 | 19 | 91,1 |
| 27 | D | 51,6 | 30 | 40 | 1,5 | 22 | 89,7 |
| 28 | E | 56,2 | 30 | 40 | 1,1 | 22 | 103,6 |
| 29 | K | 38,0 | 30 | 40 | 2,0 | 14 | 91,8 |
| 30 | G | 351,0 | 30 | 70 | 1,2 | 30 | 50,0 |
| 31 | H | 100,2 | 40 | 70 | 1,1 | 26 | 48,2 |
| 32 | I | 177,0 | 30 | 40 | 3,0 | 24 | 61,0 |
| 33 | I | 302,0 | 30 | 50 | 7,0 | 4 | 70,4 |
| 34 | L | 30,6 | 30 | 20 | 50,0 | 14 | 26,5 |
| 35 | L | 30,1 | 40 | 40 | 110,0 | 27 | 23,7 |
| 36 | L | 15,0 | 40 | 50 | 23,0 | 4 | 62,0 |
| 37 | M | 30,3 | 80 | 20 | 1,3 | 22 | 26,6 |

**Tabelle 6**

| Beispiel | Metallocen | Menge Metallocen (mg) | Menge Norbornen (g) | Druck (bar) | Mw(MAO) (g/mol) | Produktmenge (g) | VZ ($cm^3/g$) | Tg (DSC) (°C) |
|---|---|---|---|---|---|---|---|---|
| 40 | A | 89 | 107 | 3 | 750 | 3,1 | 31 | 107 |
| 41 | A | 60 | 50 | 1-3* | 750 | 5,2 | 25,6 | 101 |
| 42 | A | 60 | 107 | 1-3* | 1 300 | 5,3 | 21,0 | 120 |
| 43 | F | 60 | 107 | 1-3* | 1 300 | 12,0 | 20,0 | 129 |

* der Druck wurde während der Polymerisation innerhalb 1 Stunde linear von 1 auf 3 bar angehoben.

## Patentansprüche

1. Katalysator zur Herstellung eines Cycloolefinpolymers, bestehend aus

a) einem Metallocen der Formel IX

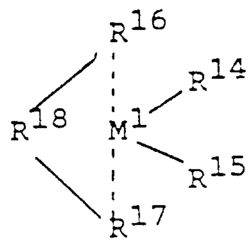

(IX)

,worin

| | |
|---|---|
| $M^1$ | Titan, Zirkon, Hafnium, Vanadium, Niob oder Tantal ist, |
| $R^{14}$ und $R^{15}$ | gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten, |
| $R^{16}$ und $R^{17}$ | gleich oder verschieden sind und einen ein- oder mehrkernigen Kohlenwasserstoffrest, welcher mit dem Zentralatom $M^1$ eine Sandwichstruktur bilden kann, bedeuten, und |
| $R^{18}$ | |

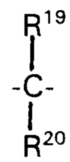

ist, wobei $R^{19}$ und $R^{20}$ gleich oder verschieden sind und ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^{19}$ und $R^{20}$ jeweils mit den sie verbindenden Atomen einen Ring bilden, und

b) einem Aluminoxan der Formel VII

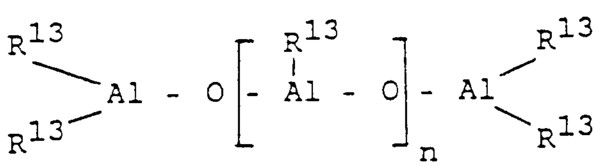

(VII)

für den linearen Typ und/oder der Formel VIII

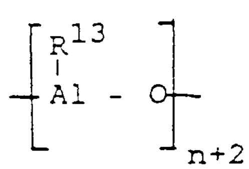

(VIII)

für den cyclischen Typ besteht, wobei in den Formeln VII und VIII $R^{13}$ eine $C_1$-$C_6$-Alkylgruppe oder Phenyl oder Benzyl bedeutet und n eine ganze Zahl von 2 bis 50 ist.

**2.** Katalysator gemäß Anspruch 1, worin das Metallocen in einer Menge von $10^{-4}$ bis 1 mol pro mol Aluminoxan vorliegt.

**3.** Katalysator gemäß Anspruch 1 oder 2, herstellbar durch Voraktivierung bei einer Temperatur von -78°C bis 100°C.

**4.** Verwendung eines Katalysators gemäß einem oder mehreren der Ansprüche 1 bis 3, zur Herstellung eines Cycloolefinpolymeren.